# EUROPEAN PATENT APPLICATION

(11) **EP 4 661 387 A1**
(43) Date of publication of application: **10.12.2025**
(21) Application number: 24179547.5
(22) Date of filing: 03.06.2024
(51) Int. Cl.: H04N 7/18, G06T 19/00

(54) **AUGMENTING ONE OR MORE OBJECTS FROM A SET OF OBJECTS IN A VIDEO STREAM**

(71) Applicant: Axis AB, 223 69 Lund (SE)
(72) Inventor: YUAN, Song, 223 69 Lund (SE); MESSER, Robert, 223 69 Lund (SE); SUCH, Rodrigo, 223 69 Lund (SE); SANDBERG, Anders, 223 69 Lund (SE)
(74) Representative: AWA Sweden AB

(57) **Abstract**

The present disclosure relates to a method implemented in a camera that augments objects in a video stream by switching between two modes controlled by Pan-Zoom-Tilt, PTZ, commands. Initially, the camera receives (S602) a signal to activate the second mode, focused on object augmentation rather than standard PTZ configurations. It then determined (S604) the spatial distance from the camera to each object using indicating a spatial coordinate of the object. Following this, a PTZ command is received to determine (S606) a zoom parameter, which helps determine (S608) a range of spatial distances. Objects within this range are selected (S610) and subsequently augmented (S612) within the video feed, enhancing the informational value of the video stream.

## Description

### Technical Field

The present invention relates to enhancement techniques of a video stream and in particular to methods, devices and software for augmenting one or more objects from a set of objects in a video stream captured by a camera.

### Background

In recent years, the integration of real-time data overlays with video streams has become increasingly prevalent in various industries to enhance situational awareness and operational efficiency. This technology allows users to view dynamic data superimposed directly onto live video feeds, facilitating immediate and informed decision-making. Typical applications include surveillance, navigation, and interactive broadcasting, where real-time data augmentation provides enhanced visual insights into the environment being monitored. One common implementation of this technology involves the display of identifiers or tags within the video feed, which correspond to specific objects or entities in view. These identifiers are often linked to a database or a data stream that provides real-time parameters such as location, velocity, or status updates. The basic overlay usually includes minimal data to maintain an uncluttered visual field and to provide only the most crucial information at a glance.

If more detailed data about an entity is required, users typically need to perform additional actions, such as clicking on the entity's identifier within the video feed. This action should ideally trigger a query to retrieve and display extended information, e.g., in a separate detailed panel, enhancing the user's understanding of the situation.

However, a significant challenge arises in the standardization of these interactions across different platforms and devices. There is no universally adopted method for transmitting user interaction events, such as clicks, from the display interface back to the video processing client, which is typically implemented in the camera capturing the video feed. Instead, each system may require custom development to support interactive features, which increase the complexity and cost of deployment.

There is thus a need for improvements in this context.

### Summary

In view of the above, solving or at least reducing one or several of the drawbacks discussed above would be beneficial, as set forth in the attached independent patent claims.

According to a first aspect of the present invention, there is provided a method implemented in a camera for augmenting one or more objects from a set of objects in a video stream captured by the camera, the video stream depicting a scene, wherein each object is associated with first data indicating a spatial coordinate of the object, wherein the camera implementing a first mode in which pan-zoom-tilt, PTZ, commands control the PTZ configuration of the camera, and a second mode in which PTZ commands control object augmentation.

The method comprises receiving a signal indicating that the second mode is activated; and for each object of the set of obj ects, determining a spatial distance from the camera to the object within a scene using the first data associated with the object.

The method further comprises receiving a first PTZ command; determining a zoom parameter from the first PTZ command; determining a range of spatial distances using the zoom parameter; selecting one or more objects among the set of objects having a spatial distance included in the range of spatial distances; and augmenting the one or more objects in the video stream.

The inventors have realized that most video clients support PTZ controls, typically used for adjusting camera views. Advantageously, as described herein, these standard PTZ commands can be repurposed to allow for the selection of objects for augmentation in scenarios where such functionality did not previously exist. This adds a layer of functionality without the need for additional hardware or controls, simplifying the integration of object selection and augmentation in existing camera systems. For instance, earlier approaches often required developing a clickable interface on the operator's side, coupled with implementing additional control mechanisms on the camera side to handle such click commands. These solutions not only demanded significant software development but also introduced complexity in terms of both hardware and user interaction. By adapting PTZ controls/commands for object selection, advanced functionalities may be seamlessly integrated directly into existing camera systems in a low complexity manner. Such adaptation may reduce the barriers to implementation and maintenance by leveraging the existing infrastructure and familiarity of users with PTZ interfaces.

For this purpose, the camera implements a first mode and a second mode. In the first mode, the PTZ commands are used in their traditional role to control the pan, tilt, and zoom settings of the camera. In the second mode, the PTZ commands are repurposed to control object augmentation. This mode is activated via a signal, shifting the function of PTZ controls from adjusting the camera's view to selecting and augmenting objects based on their spatial properties.

Specifically, after receiving the signal indicating the repurposing of the PTZ command from their regular use (i.e., going from the first mode to the second mode), the zoom parameter is used to select items based on their respective spatial distances, for example by determining a range of spatial distances using the zoom parameter and augmenting all objects with a spatial distance within that range. Put differently, in the second mode, the zoom parameter is used to define a range of spatial distances. Objects within this specified range are selected for augmentation.

As used herein, object augmentation includes enhancing or modifying the appearance of selected objects in the video stream by adding information pertaining to the selected objects in the video stream. Augmentation could include adding visual markers, highlighting the objects, overlaying additional information, or other visual enhancements that make certain objects stand out. For example, the augmentation may include presenting a name or type of the selected object, show a bounding box of the selected objects, or include any other visual enhancement or information of the selected objects in the video stream.

As used herein, the "first data" refers to the initial set of information associated with objects detected within a scene, used for determining their spatial locations relative to the camera. This data can vary in type, encompassing GPS coordinates, radar data, or video data, depending on the detection and tracking technology used.

In some examples, the step of determining the range of spatial distances comprises mapping the zoom parameter to a range of spatial distances comprises using a predefined mapping table, wherein each potential value of the zoom parameter is mapped to a predefined range of spatial distances. For example, a lower zoom level might correspond to a first range, such as 0-100 meters, while a higher zoom level could target a second range, like 100-200 meters. The mapping can vary, with some zoom levels corresponding to larger or smaller increments depending on the desired precision and operational requirements. Advantageously using a mapping table to link zoom claim parameters to ranges of spatial distances may provide a practical, efficient, and user-friendly way to enhance object selection and augmentation in video feeds.

In some examples, the step of determining the range of spatial distances comprises: determining a full range of the spatial distances among the plurality of objects; dividing the full range into a plurality of sub-ranges; and mapping the zoom parameter to a sub-range among the sub-ranges. In this example, a full range of spatial distances among the objects detected in the scene is calculated (using the first data associated with the objects). This full range represents the minimum to maximum distances at which objects are located from the camera. This full range is divided into several sub-ranges. The division can be uniform, creating equal-length intervals, or it can be dynamic, varying the length of each sub-range based on specific factors such as the zoom level or the density of objects within different depth fields. For example, areas densely populated with objects might be segmented into shorter sub-ranges to allow for more granular control and augmentation, whereas sparser areas might be covered by longer sub-ranges to simplify the interface. Depending on the zoom level adjusted via the PTZ controls, the system associates a corresponding sub-range with it. Advantageously, by dividing the spatial range into sub-ranges as described in this example, the system may more precisely target and augment objects. Operators can choose a zoom level that corresponds to a sub-range optimally suited for their immediate needs. For example, varying the length of each sub-range may beneficial in environments with variation in object density across the scene. The length may depend on density of objects in areas of the scene. Such embodiment may prove advantageous in scenarios where the majority, if not all, objects are clustered within a narrower spatial range, as opposed to being spread evenly throughout the full spectrum of distances captured by the video stream.

In some examples, the one or more objects comprises a plurality of objects, wherein the method further comprises: selecting a first object among the plurality of objects; and further augmenting the first object; wherein the first object is selected using one or more of a pan parameter or a tilt parameter of further received PTZ command(s). In these examples, after a range of objects is selected using the zoom parameter, operators can further refine their focus by selecting a single object to augment in more detail. This selection is accomplished using the pan and/or tilt parameters from additional PTZ commands received after the initial zoom-based selection. Through the efficient use of PTZ controls, these examples minimize the need for manual input or additional hardware to achieve detailed augmentation. Operators can leverage existing controls to achieve detailed views and insights, reducing operational costs. The zoom command initially selects a subset of objects based on their spatial distances, effectively grouping them for further interaction. Once this subset is defined, the pan and/or tilt commands are repurposed (again, in the second mode) to step through these preselected objects one at a time. For example, operators can use the pan command to horizontally navigate through each object, while the tilt command may allow vertical selections, thereby providing a comprehensive method to cycle through and focus on individual objects within the determined range, for which additional information may be added in the video stream. This methodological use of PTZ commands may enhance the interactivity and focus of the method for augmenting one or more objects from the set of objects in the captured video stream, allowing detailed examination and augmentation of specific objects in a targeted and efficient manner.

In some examples, the method further comprises ordering the plurality of objects; wherein the step of selecting the first object comprises, for each received further PTZ command: determining a pan direction of a pan parameter of the further received PTZ command, wherein the pan direction is one of: a negative pan direction and a positive pan direction; and changing from a currently selected first object to a new selected first object using the pan direction, such that the ordered plurality of objects can be cycled through in a direction corresponding to the pan direction.

The ordering of the objects selected using the zoom command may be accomplished using spatial attributes indicated by the first data, such as mutual locations within the scene, azimuth angles relative to the camera, or GPS coordinates like longitude and latitude. By organizing the objects according to one of these criteria, a structured and logical sequence is established, allowing for intuitive navigation. For example, if objects are arranged from left to right as they appear in the camera's view, using the PTZ controls to pan right or left will correspondingly cycle through these objects in a predictable manner. When an operator issues a pan command, the system first determines the direction of the pan based on the pan parameter received-this could be a negative (e.g., left) or positive (e.g., right) direction. The direction specified in the command dictates how the system transitions from the currently selected object to a new object within the ordered list. Depending on the setup, the pan direction can be determined using various modes such as absolute (specifying a direct angle or position and determining a pan direction based on this), relative (adjusting from the current position, wherein the pan direction relates to the adjustment direction), or continuous (ongoing adjustment until the command is altered), providing flexibility and precision in how the objects are cycled and viewed.

In some examples, the method further comprises: dividing the plurality of objects into two or more subsets of objects according to their respective spatial distance to the camera, ordering the two or more subsets, and ordering the objects within each subset; wherein the step of selecting the first object comprises, for each received further PTZ command determining whether the further PTZ command corresponds to a tilt command and/or a pan command.

Upon the further PTZ command corresponds to a tilt command, the method comprises: determining a tilt direction of the tilt parameter of the further received PTZ command, wherein the tilt direction is one of: a negative tilt direction and a positive tilt direction; and changing from a currently selected first object comprised in a first subset of the two or more subsets to a new selected first object comprised in a second subset of the two or more subsets using the tilt direction, such that the ordered subsets can be cycled through in a direction corresponding to the tilt direction;

Upon the further PTZ command corresponds to a pan command, the method comprises: determining a pan direction of the pan parameter of the further received PTZ command, wherein the pan direction is one of: a negative pan direction and a positive pan direction; and changing from a currently selected first object comprised in a first subset of the two or more subsets to a new selected first object comprised in the first subset using the pan direction, such that the ordered objects in the first subset can be cycled through in a direction corresponding to the pan direction.

In addition to the functionalities described above, where the pan command is used to horizontally cycle through selected objects, the tilt command may also be employed to navigate vertically through subsets of the selected objects based on their spatial distances. Specifically, the objects selected using the zoom command can be further organized into subgroups, each located within a distinct sub-range of the initially selected spatial distance range. The navigation methodologies applicable to the pan command, such as absolute, continuous, and relative modes, can similarly be implemented with the tilt command to ensure seamless vertical cycling through these subsets. When a new subset is selected via the tilt command, an initial object within that subset is automatically chosen, potentially the middle one in a horizontal direction, or the object closest in the horizontal plane to the previously selected object in the previous subset, and this newly selected initial object is then further augmented (i.e., further detailed information pertaining to this object is added to the video stream). This initial selection facilitates a smooth transition between subsets, maintaining spatial coherence. Within each vertically segmented subset, the objects can be cycled through using the pan command as previously described, allowing for comprehensive and systematic exploration and augmentation of the scene. It should be noted that in some implementations, the functions of the pan and tilt commands can be reversed. Specifically, the pan command may be used for selecting vertical subsets of objects, while the tilt command could be utilized for navigating through objects horizontally within those subsets.

The term "cycle through," as used in herein, refers to the process of sequentially moving from one object to another within a predefined set or order. This is typically done as described above by activating controls (like pan or tilt). When the method "cycle through" objects, it is iterating over them in a controlled manner. For example, if the objects are organized based on their spatial arrangement (left to right, near to far, etc.), cycling through them with the pan control would involve stepping through each object as from left to right or vice versa. Similarly, if using the tilt control, the method may move from objects at the top of the range of spatial distances (determined by the zoom command) to those at the bottom, or vice versa. In some embodiments, the functionality of cycling through objects is implemented in a looping or circular manner. This means that once end of the set is reached in one direction, such as the far left or the bottom, the next step would automatically loop back to the starting position at the far right or the top, respectively.

In some examples, the further augmentation comprises augmenting the first object in video stream with data (information, etc.) comprising one or more of: a name of the object, a type of the object, a speed of the object, or a location of the object.

As described herein, a two-tiered approach to augmentation may be applied. Initially, basic augmentation is applied to the selected objects (selected using the zoom command), which might include displaying a simple bounding box or the name of each object to identify them within the video feed. Then, a more detailed further augmentation is reserved for a specific object chosen from the selected objects (using the pan/tilt command as described above). This selected first object can be enhanced with additional data/information such as its name, type, speed, or exact location. This approach allows for a layered presentation of information: while the general identification helps in distinguishing multiple objects at a glance and providing basic information thereof, the detailed augmentation provides in-depth information about a particular object of interest, enhancing the utility of the surveillance or monitoring system by catering to both broad and specific informational needs.

In some examples, the signal indicating that the second mode is activated comprises a plurality of PTZ commands with parameters according to a predetermined pattern. Such a pattern-based activation may be designed to distinguish mode switching from regular PTZ operations without requiring additional hardware or interfaces. The pattern that could be used to activate the second mode may involve a sequence of directional inputs (PTZ commands) that are less likely to occur during standard camera operation. For instance, an operator might execute a circular motion with a joystick that controls the PTZ settings (i.e. corresponding to moving it up, then right, then down, then left in quick succession, possibly multiple times), and this specific motion pattern would signal the system to switch to the augmentation mode. In another example, an operator could input a zigzag pattern with the joystick, moving it right, then left, then right, then left in quick succession. Such deliberate and distinctive patterns may be recognized by the system as a command to transition into the second mode, thereby enabling enhanced functionalities without interfering with the primary PTZ controls used for camera adjustments. These patterns may be pre-defined and programmed into the camera (or configurable by the user) to ensure that mode activation is both intentional and seamless, optimizing the interface for intuitive and efficient use. It should be noted that other means of providing the signal indicating that the second mode may be implemented, such as using a selection button on a joystick or on a keyboard. Additionally, input devices other than a joystick can be employed for both signalling the switch to the second mode and for issuing PTZ commands to the camera. For example, a keyboard can effectively serve both purposes, offering a flexible and accessible way to manage camera functions and mode transitions. Moreover, the same pattern or signal used to activate the second mode can also be employed to revert the camera back to the first mode. Alternatively, a different pattern or signal might be designated for this purpose.

In some examples, the first data associated with the object comprises one of: a GPS coordinate associated with the object; radar data detecting the object; or video data depicting the object. The "first data" associated with an object in a video feed can vary in form, depending on the detection technology used and requirements of the applications. This data might include GPS coordinates if the object is equipped with a GPS device, which provides precise geographical locations by offering accurate latitude and longitude measurements. Alternatively, if radar technology is employed, the first data could consist of radar data, which detects objects by emitting radio waves and analysing the echoes returned. This method is effective for determining the distance of an object from the radar source. In another example, the first data could also be video data from the camera itself, where objects are identified visually within the video feed.

In some examples, the first data associated with the object comprises video data depicting the object, wherein the step of determining a spatial distance from the camera to the object within a scene comprises: identifying the object using the video data; determining physical dimensions of the object using the identification; determining depicted dimensions of the object from the video data; and determining the spatial distance using the depicted size and the real size. In scenarios where the first data consists of video data, determining the spatial distance of an object from the camera may be performed by identifying the object within the video stream based on visual characteristics such as shape and colour, or using additional data like GPS coordinates. Once identified, the physical dimensions of the object, such as height and width, are obtained. These dimensions may be known from previous data or estimated from an external source that correlates visual features or other identifiers with dimensional data. After establishing the physical size, the depicted dimensions are measured from the video. The spatial distance is then calculated by comparing these real and depicted dimensions, allowing for an accurate assessment of how far the object is from the camera.

The techniques outlined here are versatile and can be applied across a variety of settings. In some examples, the objects correspond to one of: ships, airplanes, or individuals equipped with body worn cameras. In the case of the objects corresponding to ships, the method may further comprise receiving GPS data of the plurality of objects from an external automatic Identification System, AIS connected to the camera. This AIS data provides precise location information about the ships, which can either be used in real time to dynamically augment the video feed with up-to-date positioning or be intermittently received and stored in a memory of the camera for later use.

According to a second aspect of the invention, the above object is achieved by a non-transitory computer-readable storage medium having stored thereon instructions for implementing the method according to the first aspect when executed on a camera having processing capabilities.

According to a third aspect of the invention, the above object is achieved by a camera for augmenting one or more objects from a set of objects in a video stream captured by the camera, the video stream depicting a scene, wherein each object is associated with first data indicating a spatial coordinate of the object, wherein the camera implementing a first mode in which pan-zoom-tilt, PTZ, commands control the PTZ configuration of the camera, and a second mode in which PTZ commands control object augmentation, the camera configured for: receiving a signal indicating that the second mode is activated; for each object of the set of objects, determining a spatial distance from the camera to the object within a scene using the first data associated with the object; receiving a first PTZ command; determining a zoom parameter from the first PTZ command; determining a range of spatial distances using the zoom parameter; selecting one or more objects among the set of objects having a spatial distance included in the range of spatial distances; and augmenting the one or more objects in the video stream.

The second and third aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
Figure 1 shows an image frame including a set of obj ects, wherein some of the objects are selected based on their respective spatial distances to the camera, and augmented, according to embodiments;
Figure 2 shows further augmentation of a first object among the selected objects, according to embodiments;
Figure 3 shows cycling through the selected objects using a pan parameter, according to embodiments;
Figure 4 shows cycling through the selected objects using a pan parameter and a tilt parameter, according to embodiments;
Figure 5 shows a system comprising a camera implementing the video stream augmentation techniques described herein, according to embodiments;
Figure 6 shows a flow chart of a method for augmenting one or more objects from a set of objects in a video stream, according to embodiments;
Figures 7-8 show flow charts of methods of determining a first object among the selected objects, and further augmenting the first object.

### Detailed Description

The present invention will now be described more fully hereinafter with reference to the accompanying drawings, in which embodiments of the invention are shown. The systems and devices disclosed herein will be described during operation.

The techniques described herein revolves around an enhanced method for augmenting objects in a video feed using Pan-Tilt-Zoom (PTZ) controls, traditionally employed for adjusting camera views. These techniques repurpose standard PTZ controls to select and augment objects based on their spatial distances, determined via zoom parameter of the PTZ commands, and optionally are further refined by pan and tilt parameters of further PTZ commands, for precise navigation through the selected objects for further augmentation. Advantageously, these techniques are implemented to capitalize on the ubiquity of PTZ functionalities across video clients, thus avoiding the need for additional hardware or complex software modifications. By using the existing PTZ controls in a novel way, the techniques simplify the integration and operational process, allowing for more dynamic and detailed interaction with objects in the video stream. The techniques provide a cost-effective solution to augmenting objects in a video stream within a monitored environment.

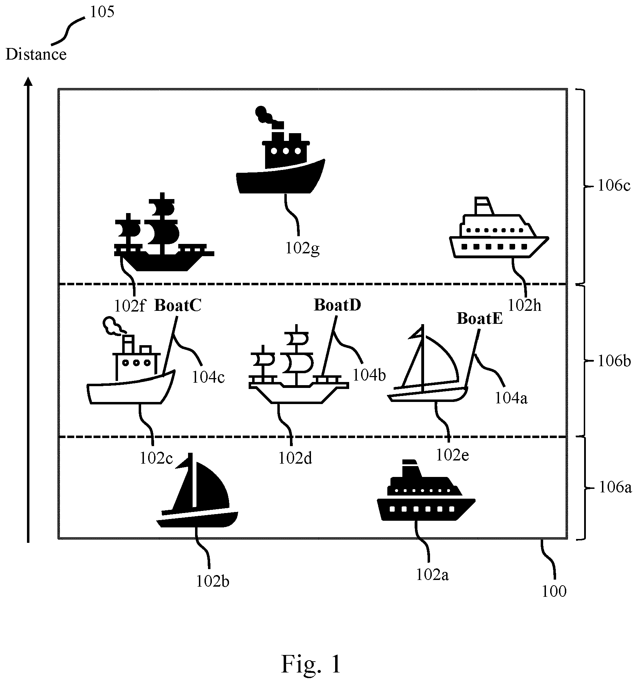

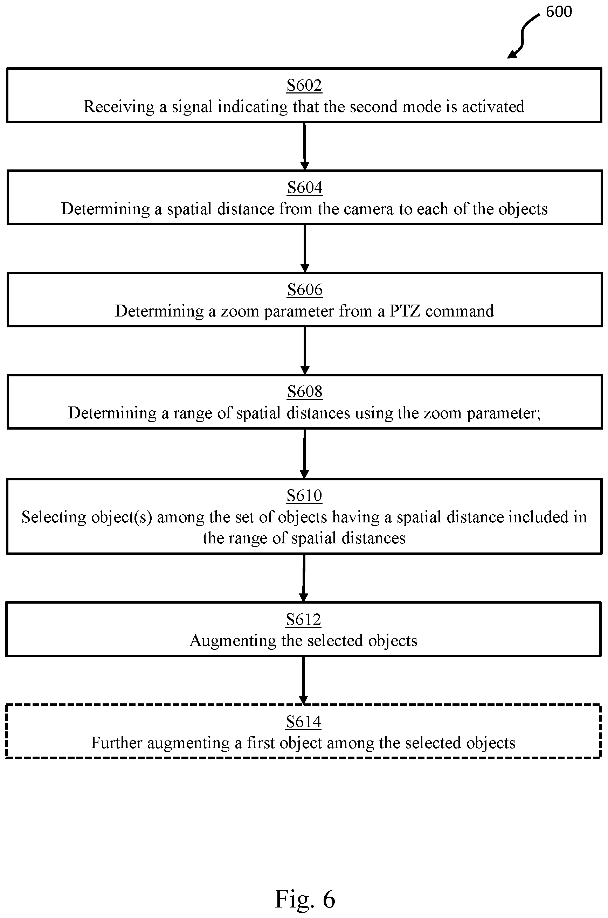

Embodiments for augmenting one or more objects from a set of objects in a video stream captured by the camera will now be described in conjunction with figures 1-5, and further by referring to method steps of the flow charts of figure 6-8.

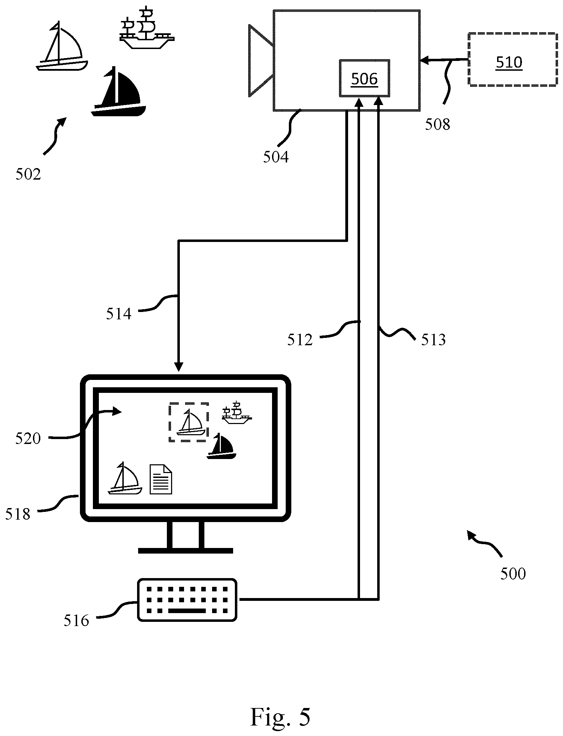

Figure 5 shows by way of example a system 500 including a camera 504 implementing a method 600 for augmenting one or more objects from a set of objects in a video stream 514 captured by the camera 504. The camera 504 comprises a processing module 506. The processing module 504 comprises one or more processors, and one or more non-transitory computer-readable media storing instructions executable by the one or more processors, wherein the instructions, when executed, cause the camera to perform the methods described herein. Suitable processors for the execution of a program of instructions, by way of example, both general and special purpose microprocessors, and the sole processor or one of multiple processors or cores, of any kind of processing module. The processors can be supplemented by, or incorporated in, ASICs (application-specific integrated circuits).

The camera 504 utilizes pan, tilt, and zoom (PTZ) functionalities to offer both extensive area coverage and detailed views of a scene 502 using a single device. These PTZ functions can be controlled remotely, allowing a remote operator to adjust the PTZ parameters of camera 504 via an input device 516, such as a keyboard 516 or a joystick (not shown in figure 1). As such, the camera 504 is configured to receive PTZ commands from a remote entity.

The camera 504 is configured to capture a video stream depicting the scene 502 comprising a set of objects. In the examples described herein, the objects in the scene 502 are typically exemplified as boats or ships. However, this is just by way of example and the objects may in other embodiments be any other type of objects, such as airplanes, individuals equipped with body worn cameras, ground vehicles, surveillance drones, etc.

The camera 504 implements a first mode in which pan-zoom-tilt, PTZ, commands control the PTZ configuration of the camera 504, and a second mode in which PTZ commands control object augmentation.

The camera 504 is configured to receive S602 a signal 512 indicating that the second mode is activated. The signal 512 may be provided using the input device 516. In some embodiments, the signal 512 indicating that the second mode is activated comprises a plurality of PTZ commands with parameters according to a predetermined pattern. The processing module 506 may in this case be configured to recognize the pattern, for example by analyzing the sequence and timing of the PTZ inputs in the signal 512 to match them with a known configuration stored in its memory. This pattern recognition allows the camera 504 to switch between operational modes seamlessly, using the existing interface for receiving PTZ commands. Two examples of patterns that could be used to activate the second mode in the camera 504 via PTZ commands include a circular motion and a zigzag pattern. For the circular motion, an operator might move the joystick in a deliberate clockwise or counterclockwise direction, which the processing module 506 recognizes as a cue to switch modes. Alternatively, the zigzag pattern could involve moving the joystick alternately left and right or up and down in quick succession. Such patterns are distinctive and would clearly signal an intentional command to change modes, minimizing the chance of accidental activation.

In the second mode, the camera 504 (e.g., the processing module 506) is configured to augment the video stream, and in particular to add information pertaining to a subset of the set of objects captured in the video stream. For that reason, the camera 504 is configured to select one or more objects from the set of objects, wherein these one or more objects will be augmented in the video stream. The selection is done by first determining S604 a spatial distance from the camera 504 to each of the objects in the scene 502, using with first data, associated with each object, and indicating a spatial coordinate of the object.

The first data may be radar data detecting the object, for example received by a radar sensor associated with the camera 504. Using such data to determine S604 the spatial distance is essentially done by calculating the time delay between the radar signal emission and its return after reflecting off the object, thereby enabling the camera 504 to pinpoint the location of the object relative to the position of the camera 504.

The first data may further be video data depicting the object, in other words, the video stream capturing the scene. Using such data to determine the spatial distance may be done by analyzing the size of the object in the video relative to its known physical dimensions. This method involves comparing the actual size of the object with how it appears in the video stream. Techniques such as perspective analysis or using standard visual references within the video stream may further be used to calculate the distance based on how the size of the object in the video stream changes due to its position relative to the camera 504.

The first data may further be GPS data associated with the object. Such data may be received from any suitable source such as such as a GPS tracking device installed on the object. This GPS data can be communicated to the camera using wireless communication technologies. Common methods include using Wi-Fi, cellular networks (such as 4G or 5G), or satellite communications. Additionally, as exemplified in figure 1, the GPS data 508 could be sourced from external GPS tracking services 510 that maintain real-time location databases for various assets. An example of such GPS tracking service is external Automatic Identification System, AIS, 510 connected to the camera 504.

The camera is configured to receive PTZ commands 513 from the input device 516. The zoom parameter within these commands 513 is determined S606 and utilized to define S608 a range of spatial distances, which helps in selecting S610 specific objects for augmentation S612. The details of this selection and augmentation process are further explained below in conjunction with figures 1-4 and 6-7. Once the objects have been augmented S612, the thus enhanced video stream 514, which includes these augmented objects, is then transmitted to a display 518. This enables the enhanced video stream 514 to be presented as a graphical interface 520 to an operator, for example, providing a comprehensive view that integrates both real-time imagery and augmented data for improved situational awareness and decision-making.

Figure 1 schematically illustrates an image frame 100 containing a set of objects 102 captured in a video stream. These objects 102 are mapped to specific spatial distances 105 from the camera that captured the image frame 100. The entirety of these spatial distances 105 within the image frame 100 can be segmented into various ranges 106 of spatial distances. A zoom parameter from a PTZ command can then be determined S606 and utilized to select S608 one of these ranges 106a-c, which in turn facilitates the selection S610 of specific objects 102a-g from the set of objects 102 for augmentation S612. In the depicted example of figure 1, three distinct ranges 106a-c are identified.

These ranges 106 may be predefined and could, for instance, each represent a set interval of spatial distances. The interval assigned to each range might be consistent across all ranges 106, or it could vary between them. For example, each range 106 a-c could represent an interval of X meters of distances, where X could be any suitable measurement such as 50, 100, 200 meters, etc., depending on the specific requirements for precision and granularity in the augmentation process. In other examples, closer objects might be grouped within shorter distance intervals (e.g., every 50 meters) to allow for more detailed augmentation due to their prominence and clarity in the video stream. Conversely, objects that are farther away could be grouped into broader intervals (e.g., every 200 meters), since fine details may be less discernible at greater distances. In some examples, the maximum and minimum distances 105 at which objects are positioned from the camera may be determined. Following this, the resulting full range can be divided into multiple sub-ranges of the same or differing lengths.

To determine S606 which range a value of a zoom parameter may represent, each possible value of a zoom parameter may be mapped to one of the possible ranges 106a-c. In some examples, an initial range is selected based on the current zoom parameter when the PTZ command is first received. Subsequent adjustments to the zoom level then dynamically shift the selected range of spatial distances either closer to or further away from the camera, depending on whether the new zoom parameter is larger or smaller than the previous setting. For instance, zooming out (decreasing the zoom parameter) typically shifts the selected range to cover a closer spatial range, while zooming in (increasing the zoom parameter) selects more distant objects for augmentation.

In figure 1, the middle range 106b of spatial distances is determined S608 based on a zoom parameter determined S606 from a received PTZ command. The objects 102c-e having a spatial distance included in the selected range 106b is then selected S610 to be augmented S612.

Augmenting S612 the selected objects 102c-e may comprise adding any type of information 104 to the video stream. In the example of figure 1, the augmentation S612 of an object 102c-e comprise adding information 104 including the name of the object 102c-e and a line between the object 102c-e and the name to clarify which object that the name belongs to. Other examples include marking the object in some way, for example by including the bounding box of the object in the video stream. Another example of augmentation could be the display of icons or symbols near each object. For example, for ships, the icon could indicate its type (cargo, tanker, passenger) or operational status (such as an anchor symbol for ships at anchor).

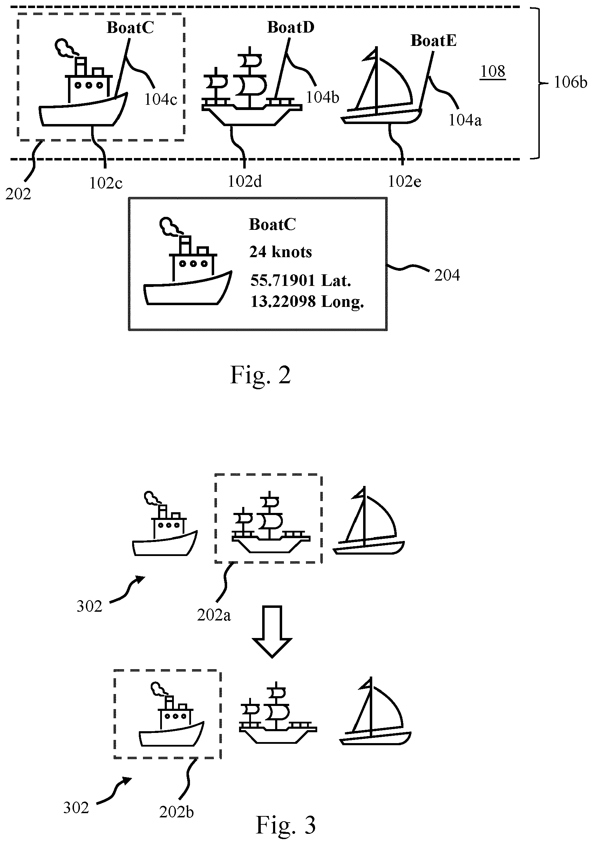

It may be advantageous to keep the added information 104 pertaining to the selected S610 multiple objects 102 c-e small and unobtrusive to avoid visual clutter in the augmented video stream, as shown in figure 1. By using minimalistic enhancements 104 such as simple lines, names, or small icons for the initial augmentation S612 of (potentially) several objects, the overall clarity of the scene may be preserved, making it easier for viewers to maintain an overall understanding of the situation. To provide more comprehensive information without cluttering the view, one of the initially selected S610 augmented objects 102c-e can be further augmented S614 with additional, more detailed information. This selective enhancement approach allows for a deeper focus on a particular object of interest when needed, while keeping the broader view less crowded. Such techniques will now be described in conjunction with figures 2.

For ease of explanation, figure 2 only shows the three selected objects 102c-e in the range 106b of spatial distances from figure 1. Among these, one object 102c (the "first object") is chosen for further augmentation S612. This process involves adding more detailed information 202, 204 specific to the first object 102c. The additional augmentation S614 can include adding various types of information 202, 204 to the video stream that enhance an operator's understanding of the first object 102c. For instance, an additional information panel 204 can be integrated into the video stream. This panel may be consistently positioned in a particular area of each image frame, such as near the lower or upper edge, depending on the design needs.

Such an information panel 204 might display details such as the name, type, speed, or location of the first object 102c, tailored to the context and requirements of the monitoring system. Moreover, to highlight the relationship between the information panel 204 and the first object 102c, a bounding box 202 may be added around object 102c or an existing bounding box may be enhanced. Such visual cue may ensure clear identification of the first object 102c among the selected objects 102c-e, making it evident which object the information panel 204 pertains to. This method of selectively augmenting one object with additional information helps maintain overall visual clarity while providing detailed insights where needed.

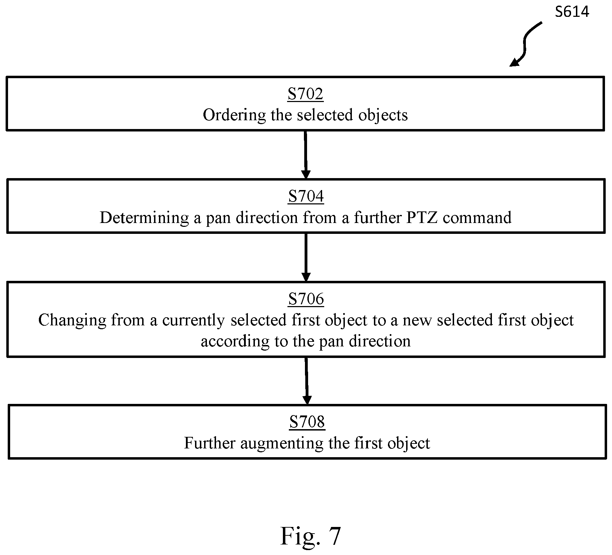

As discussed above, in some embodiments, besides the zoom command, other components of the PTZ command can be utilized to provide an interface for navigating among the selected objects 102 to achieve the additional augmentation S614. Such techniques will now be exemplified in conjunction with figures 3-4 referring to the flow charts of figures 7-8.

In figure 3, the selected objects (using the zoom parameter as described above) is collectively referred to as reference 302. These objects 302 may be ordered S702 in a specific order, such as horizontally, to facilitate navigation via PTZ commands. This ordering aids in systematically selecting each object for potential additional augmentation.

Initially, when a new range of spatial distances is determined from a PTZ command, resulting in a new set of one or more selected objects 302, the first object (indicated in figure 2 using the dashed rectangle 202a) may be selected in different ways. For example, the middle one in a horizontal direction of the one or more selected objects 302 may be selected as the first object for further augmentation. In other examples, the object closest in the horizontal plane to the previously selected first object (i.e. for a previous range of spatial distances) may be selected as the first object upon a new range of spatial distances is being determined. In figure 2, the object centrally positioned in the horizontal arrangement of selected objects 302 is initially chosen as the first object for further detailed augmentation.

Following the initial selection of the first object, subsequent navigation among the ordered objects is facilitated by further PTZ command inputs. In examples, a pan direction from the pan parameter of the received PTZ command is determined S704. The pan direction is categorized as either negative or positive, e.g., corresponding to leftward or rightward movement, respectively. Based on this direction, the currently highlighted 202a first object is changed S706 to a new highlighted 202b first object. This transition uses the established pan commands to cycle through the ordered objects 302 in a coherent manner, either moving left or right along the ordered series of selected objects 302.

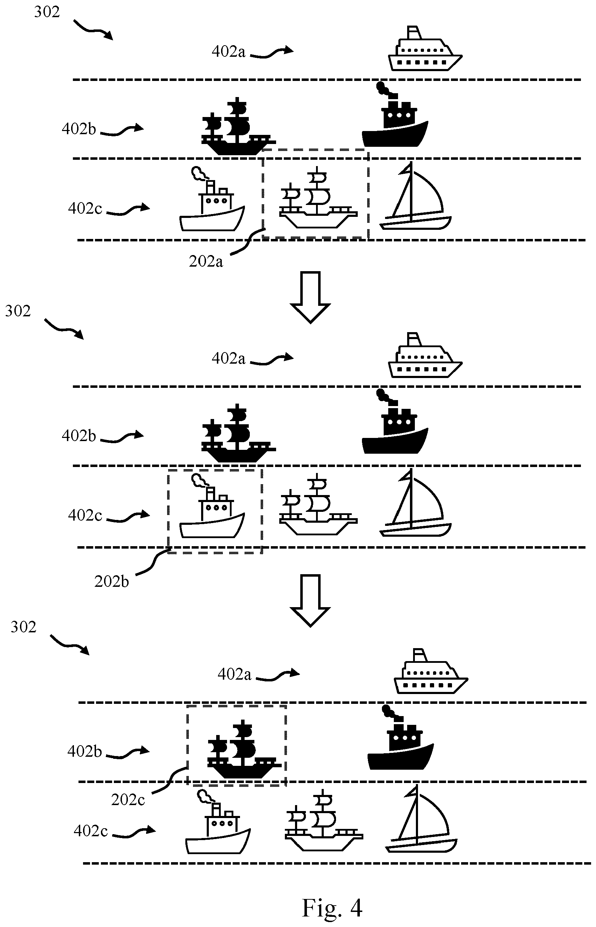

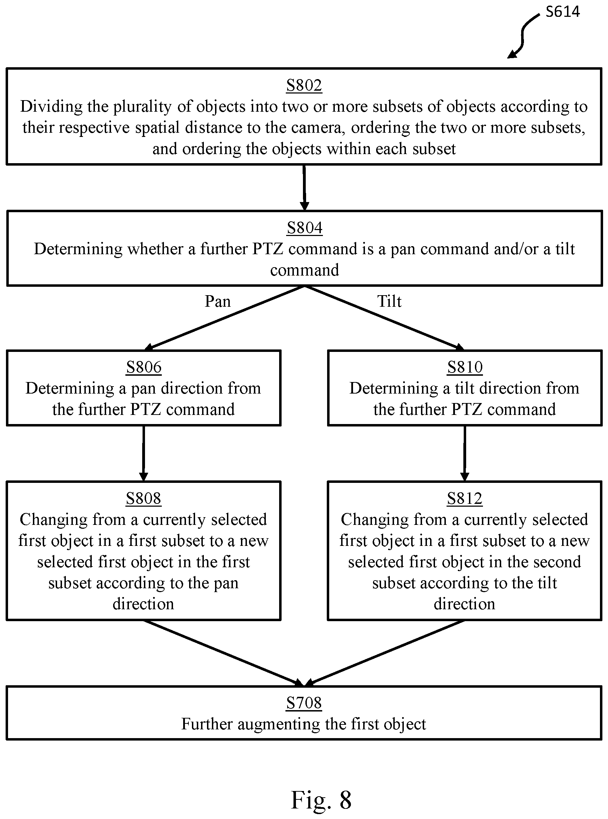

In certain scenarios, the number of objects within a range of distances determined by the zoom command may be large, or the selected objects 302 may be positioned in a way that makes navigating through them complex. In such cases, it can be advantageous to enable the selection of the first object to occur in two directions: both horizontally and vertically. Such techniques will now be exemplified in conjunction with figure 4 referring to the flow chart of figure 8.

In figure 4, the step of selecting a first object among the plurality of objects 302 is efficiently implemented to manage a dense or complex arrangement of objects captured in a video stream. Initially, the plurality of selected objects 302 is divided S802 into two or more subsets 402. The dividing the plurality of objects into a plurality of subsets is achieved by categorizing them into groups based on their proximity to the camera. For instance, one subset might include all objects that are between 75 and 100 meters away, another subset could comprise objects located 100 to 125 meters away, and so forth.

These subsets 402 are ordered according to their respective spatial distances from the camera, and the objects within each subset being ordered as described above to facilitate navigation.

Initially, a first object from the lower (e.g., closer to the camera) subset 402c is selected (and highlighted 202a), e.g. as described above.

The process for selecting the first object from these subsets is dynamically responsive to the type of PTZ command received. When a further PTZ command is issued, the camera first determines S804 whether the command is a tilt or a pan command.

If the PTZ command is identified as a pan command, the direction of the pan is determined S806 to be either negative (left) or positive (right). Based on this direction, the selection of the first object shifts S808 within the same subset 402c from the currently highlighted first object (highlighted 202a) to another object (highlighted 202b) in the same subset 402c. This action enables horizontal cycling through the objects, allowing the user to navigate laterally across the objects that are spatially closer or further but on the same plane (within the same subset 402c) using the PTZ commands.

Conversely, if the command corresponds to a tilt command, the camera then determines S810 the tilt direction, which can be either negative (upwards) or positive (downwards). Using this tilt direction, the system facilitates a change S812 from the currently selected first object (highlighted 202b) in one subset 402c to a new first object (highlighted 202c) in another subset 402b. This allows the user to cycle vertically through the ordered subsets 402 in alignment with the tilt direction, moving from one spatial layer of objects to another.

This dual-direction approach, using tilt for vertical navigation and pan for horizontal movement or vice versa, may enhance the ability of the operator to manage and interact with a large number of objects efficiently. It allows for quick adjustments in focus, either depth-wise or laterally, ensuring that the operator can access and augment any object with precision and ease within a complex scene.

The above embodiments are to be understood as illustrative examples of the invention. For example, additional applications of the augmentation techniques are possible and anticipated, such as in a production facility setting. Here, the described methods can be effectively utilized to track objects as they move through various stages of a production flow. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method (600) implemented in a camera (504) for augmenting one or more objects (102c-e) from a set of objects (102) in a video stream (514) captured by the camera, the video stream depicting a scene (502), wherein each object is associated with first data (508) indicating a spatial coordinate of the object, wherein the camera implementing a first mode in which pan-zoom-tilt, PTZ, commands control the PTZ configuration of the camera, and a second mode in which PTZ commands control object augmentation, the method comprising:
receiving (S602) a signal (512) indicating that the second mode is activated;
for each object of the set of objects, determining (S604) a spatial distance (105) from the camera to the object within a scene using the first data associated with the obj ect;
receiving a first PTZ command (513);
determining (S606) a zoom parameter from the first PTZ command;
determining (S608) a range (106) of spatial distances using the zoom parameter;
selecting (S610) the one or more objects among the set of objects having the spatial distance included in the range of spatial distances; and
augmenting (S612) the one or more objects in the video stream.

2. The method of claim 1, wherein the step of determining the range of spatial distances comprises mapping the zoom parameter to a range of spatial distances comprises using a predefined mapping table, wherein each potential value of the zoom parameter is mapped to a predefined range of spatial distances;

3. The method of claim 1, wherein the step of determining the range of spatial distances comprises:
determining a full range of the spatial distances among the plurality of objects;
dividing the full range into a plurality of sub-ranges; and
mapping the zoom parameter to a sub-range among the sub-ranges.

4. The method of any one of claims 1-3, wherein the one or more objects comprises a plurality of objects, wherein the method further comprises:
selecting a first object (102f) among the plurality of objects; and
further augmenting (S614) the first object;
wherein the first object is selected using one or more of a pan parameter or a tilt parameter of further received PTZ command(s).

5. The method of claim 4, further comprising:
ordering (S702) the plurality of objects;
wherein the step of selecting the first object comprises, for each received further PTZ command:
determining (S704) a pan direction of a pan parameter of the further received PTZ command, wherein the pan direction is one of: a negative pan direction and a positive pan direction;
changing (S706) from a currently selected first object to a new selected first object using the pan direction, such that the ordered plurality of objects can be cycled through in a direction corresponding to the pan direction.

6. The method of claim 4, further comprising
dividing (S802) the plurality of objects into two or more subsets (402) of objects according to their respective spatial distance to the camera, ordering the two or more subsets, and ordering the objects within each subset;
wherein the step of selecting the first object comprises, for each received further PTZ command:
determining (S804) whether the further PTZ command corresponds to a tilt command and/or a pan command;
upon the further PTZ command corresponds to a tilt command:
determining (S810) a tilt direction of the tilt parameter of the further received PTZ command, wherein the tilt direction is one of: a negative tilt direction and a positive tilt direction;
changing (S812) from a currently selected first object comprised in a first subset of the two or more subsets to a new selected first object comprised in a second subset of the two or more subsets using the tilt direction, such that the ordered subsets can be cycled through in a direction corresponding to the tilt direction;
upon the further PTZ command corresponds to a pan command:
determining (S806) a pan direction of the pan parameter of the further received PTZ command, wherein the pan direction is one of: a negative pan direction and a positive pan direction;
changing (S808) from a currently selected first object comprised in a first subset of the two or more subsets to a new selected first object comprised in the first subset using the pan direction, such that the ordered objects in the first subset can be cycled through in a direction corresponding to the pan direction.

7. The method of any one of claims 4-6, wherein the further augmentation comprises augmenting the first object in video stream with data comprising one or more of: a name of the object, a type of the object, a speed of the object, or a location of the obj ect.

8. The method of any one of claims 1-7, wherein the signal indicating that the second mode is activated comprises a plurality of PTZ commands with parameters according to a predetermined pattern.

9. The method of any one of claims 1-8, wherein the first data associated with the object comprises one of:
a GPS coordinate associated with the object;
radar data detecting the object; or
video data depicting the object.

10. The method of claim 9, wherein the first data associated with the object comprises video data depicting the object, wherein the step of determining a spatial distance from the camera to the object within a scene comprises:
identifying the object using the video data;
determining physical dimensions of the object using the identification;
determining depicted dimensions of the object from the video data; and
determining the spatial distance using the depicted size and the real size.

11. The method of any one of claims 1-10, wherein the objects correspond to one of:
ships, airplanes, or individuals equipped with body worn cameras.

12. The method of claim 11, wherein the objects comprise ships, wherein the method further comprises:
receiving GPS data (508) of the plurality of objects from an external automatic Identification System, AIS (510) connected to the camera.

13. A non-transitory computer-readable storage medium having stored thereon instructions for implementing the method according to any one of claims 1-12 when executed on a camera having processing capabilities.

14. A camera for augmenting one or more objects from a set of objects in a video stream captured by the camera, the video stream depicting a scene, wherein each object is associated with first data indicating a spatial coordinate of the object, wherein the camera implementing a first mode in which pan-zoom-tilt, PTZ, commands control the PTZ configuration of the camera, and a second mode in which PTZ commands control object augmentation, the camera configured for:
receiving a signal indicating that the second mode is activated;
for each object of the set of objects, determining a spatial distance from the camera to the object within a scene using the first data associated with the object;
receiving a first PTZ command;
determining a zoom parameter from the first PTZ command;
determining a range of spatial distances using the zoom parameter;
selecting one or more objects among the set of objects having a spatial distance included in the range of spatial distances; and
augmenting the one or more objects in the video stream.

## Amended claims

### Amended claims in accordance with Rule 137(2) EPC.

1. A method (600) implemented in a camera (504) for augmenting one or more objects (102c-e) from a set of objects (102) depicted in an image frame in a video stream (514) captured by the camera, the video stream depicting a scene (502), wherein each object is associated with first data (508) indicating a spatial coordinate of the object, wherein the camera implementing a first mode in which pan-zoom-tilt, PTZ, commands control the PTZ configuration of the camera, and a second mode in which PTZ commands select one or more objects among the set of objects for augmentation, the method comprising:
receiving (S602) a signal (512) indicating that the second mode is activated;
for each object of the set of objects, determining (S604) a spatial distance (105) from the camera to the object within a scene using the first data associated with the object;
receiving a first PTZ command (513);
determining (S606) a zoom parameter from the first PTZ command;
determining (S608) a range (106) of spatial distances using the zoom parameter;
selecting (S610) the one or more objects among the set of objects having the spatial distance included in the range of spatial distances; and
augmenting (S612) the one or more objects in the video stream.

2. The method of claim 1, wherein the step of determining the range of spatial distances comprises mapping the zoom parameter to a range of spatial distances comprises using a predefined mapping table, wherein each potential value of the zoom parameter is mapped to a predefined range of spatial distances;

3. The method of claim 1, wherein the step of determining the range of spatial distances comprises:
determining a full range of the spatial distances among the plurality of objects;
dividing the full range into a plurality of sub-ranges; and
mapping the zoom parameter to a sub-range among the sub-ranges.

4. The method of any one of claims 1-3, wherein the one or more objects comprises a plurality of objects, wherein the method further comprises:
selecting a first object (102f) among the plurality of objects; and
further augmenting (S614) the first object;
wherein the first object is selected using one or more of a pan parameter or a tilt parameter of further received PTZ command(s).

5. The method of claim 4, further comprising:
ordering (S702) the plurality of objects;
wherein the step of selecting the first object comprises, for each received further PTZ command:
determining (S704) a pan direction of a pan parameter of the further received PTZ command, wherein the pan direction is one of: a negative pan direction and a positive pan direction;
changing (S706) from a currently selected first object to a new selected first object using the pan direction, such that the ordered plurality of objects can be cycled through in a direction corresponding to the pan direction.

6. The method of claim 4, further comprising
dividing (S802) the plurality of objects into two or more subsets (402) of objects according to their respective spatial distance to the camera, ordering the two or more subsets, and ordering the objects within each subset;
wherein the step of selecting the first object comprises, for each received further PTZ command:
determining (S804) whether the further PTZ command corresponds to a tilt command and/or a pan command;
upon the further PTZ command corresponds to a tilt command:
determining (S810) a tilt direction of the tilt parameter of the further received PTZ command, wherein the tilt direction is one of: a negative tilt direction and a positive tilt direction;
changing (S812) from a currently selected first object comprised in a first subset of the two or more subsets to a new selected first object comprised in a second subset of the two or more subsets using the tilt direction, such that the ordered subsets can be cycled through in a direction corresponding to the tilt direction;
upon the further PTZ command corresponds to a pan command:
determining (S806) a pan direction of the pan parameter of the further received PTZ command, wherein the pan direction is one of: a negative pan direction and a positive pan direction;
changing (S808) from a currently selected first object comprised in a first subset of the two or more subsets to a new selected first object comprised in the first subset using the pan direction, such that the ordered objects in the first subset can be cycled through in a direction corresponding to the pan direction.

7. The method of any one of claims 4-6, wherein the further augmentation comprises augmenting the first object in video stream with data comprising one or more of: a name of the object, a type of the object, a speed of the object, or a location of the object.

8. The method of any one of claims 1-7, wherein the signal indicating that the second mode is activated comprises a plurality of PTZ commands with parameters according to a predetermined pattern.

9. The method of any one of claims 1-8, wherein the first data associated with the object comprises one of:
a GPS coordinate associated with the object;
radar data detecting the object; or
video data depicting the object.

10. The method of claim 9, wherein the first data associated with the object comprises video data depicting the object, wherein the step of determining a spatial distance from the camera to the object within a scene comprises:
identifying the object using the video data;
determining physical dimensions of the object using the identification;
determining depicted dimensions of the object from the video data; and
determining the spatial distance using the depicted size and the real size.

11. The method of any one of claims 1-10, wherein the objects correspond to one of:
ships, airplanes, or individuals equipped with body worn cameras.

12. The method of claim 11, wherein the objects comprise ships, wherein the method further comprises:
receiving GPS data (508) of the plurality of objects from an external automatic Identification System, AIS (510) connected to the camera.

13. A non-transitory computer-readable storage medium having stored thereon instructions for implementing the method according to any one of claims 1-12 when executed on a camera having processing capabilities.

14. A camera for augmenting one or more objects from a set of objects depicted in an image frame in a video stream captured by the camera, the video stream depicting a scene, wherein each object is associated with first data indicating a spatial coordinate of the object, wherein the camera implementing a first mode in which pan-zoom-tilt, PTZ, commands control the PTZ configuration of the camera, and a second mode in which PTZ commands select one or more objects among the set of objects for augmentation, the camera configured for:
receiving a signal indicating that the second mode is activated;
for each object of the set of objects, determining a spatial distance from the camera to the object within a scene using the first data associated with the object;
receiving a first PTZ command;
determining a zoom parameter from the first PTZ command;
determining a range of spatial distances using the zoom parameter;
selecting one or more objects among the set of objects having a spatial distance included in the range of spatial distances; and
augmenting the one or more objects in the video stream.
